# EUROPEAN PATENT APPLICATION

(11) **EP 1 655 128 A1**
(43) Date of publication of application: **10.05.2006**
(21) Application number: 05022397.3
(22) Date of filing: 13.10.2005
(51) Int. Cl.: B32B 7/02, G02B 1/10, C03C 17/34

(54) **Impact-absorbing sheet**

(30) Priority: 13.10.2004 JP 2004298350
(71) Applicant: NITTO DENKO CORPORATION, Osaka (JP)
(72) Inventor: Azumi, Yukiko, Ibaraki-shi Osaka (JP); Sugihara, Yasunori, Ibaraki-shi Osaka (JP)
(74) Representative: Grünecker, Kinkeldey, Stockmair & Schwanhäusser Anwaltssozietät

(57) **Abstract**

An impact-absorbing sheet which comprises; an impact absorber including a single layer or a laminate of a rubber foam; an adhesive layer on at least one surface of the impact absorber, wherein a thickness of the adhesive layer is 0.3 mm or more.

## Description

### FIELD OF THE INVENTION

The present invention relates to an impact-absorbing sheet and an image display device equipped with the same.

### BACKGROUND ART

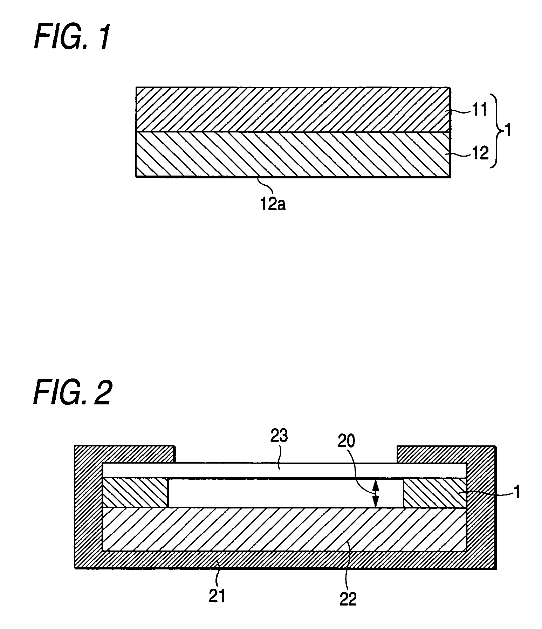

Conventionally, in a portable image display device, for example as shown in Fig. 2, an image display panel 22 is placed in a case 21, and a transparent front face plate 23 for protecting the image display panel 22 is provided on the viewing side thereof. When the transparent front face plate 23 is placed, a space 20 is provided between the image display panel 22 and the transparent front face plate 23, and an impact-absorbing sheet 1 is placed in this space 20, whereby an external impact force is prevented from acting directly on the image display panel 22 and a decrease in visibility caused by the penetration or generation of dust from the external environment or inner members is prevented.

However, the conventional impact-absorbing sheet has problems in that it causes distortion of the case or the image display panel due to its high repulsive force against compression, the image display panel is broken caused by an impact from the outside due to its low impact-absorbing property and the like. For example, in the case where an open-cell foam is used as an impact absorber, since the change in the thickness is large for the impact, when a high-speed impact is applied, the foam bottoms out. In addition, in the case where a closed-cell foam is used, the foam does not have a soft feeling, and in particular when a low-speed impact is applied, it does not sufficiently absorb the impact, whereby a problem of breaking the image display panel is likely to occur.

As an impact-absorbing sheet that solves such a disadvantage, has a high impact-absorbing property and has a low repulsive force, an impact-absorbing sheet in which a foam layer having closed cells and a foam layer having open cells are laminated has been disclosed (see Patent Documents 1 and 2). However, such an impact-absorbing sheet does not express a sufficient impact-absorbing property, and in particular when an impact by pressing or the like (a low-speed deformation) is applied, there are problems in that breakage occurs in the image display panel caused by the concavity and convexity of the case, defective appearance is caused by the penetration or generation of dust and the like.

In addition, among the impact-absorbing sheets, some generate a harmful gas, and the development of an impact- absorbing sheet with a high performance that can be produced and used without causing environmental pollution has been demanded.

[Patent Document 1] JP-A-7-241951

[Patent Document 2] JP-UM-A-6-46941

### SUMMARY OF THE INVENTION

In view of the above-mentioned problems, an object of the present invention is to provide an impact-absorbing sheet that exhibits an excellent impact-absorbing property to both a high-speed external impact and a low-speed external impact and is easily disposed in the inside or the like of an image display device. Another object of the present invention is to provide an image display device which is equipped with the above-mentioned impact-absorbing sheet, and in which breakage or distortion of an image display panel, a case or the like due to impact is less likely to occur.

The present inventors have made intensive studies in order to accomplish the above-mentioned objects, and as a result, they found that by combining a rubber foam and an adhesive layer, the problem of bottom-out caused by the change in the thickness due to an impact and the problem of the repulsive force can be solved, and an impact-absorbing sheet that can exhibit a high impact-absorbing effect on both a high-speed external impact and a low-speed external impact can be obtained, thus the present invention has been completed.

That is, the present invention has the following constitution.
(1) An impact-absorbing sheet which comprises:
   an impact absorber including a single layer or a laminate of a rubber foam,
   an adhesive layer on at least one surface of the impact absorber, wherein a thickness of the adhesive layer is 0.3 mm or more.
(2) The impact-absorbing sheet according to the above (1), wherein a thickness of the impact absorber is from 0.3 to 2.0 mm.
(3) The impact-absorbing sheet according to the above (1), wherein a polymer constituting the rubber foam is a thermoplastic elastomer.
(4) The impact-absorbing sheet according to the above (1), wherein the rubber foam is a foam formed through a step of pressure reduction after a polymer having rubber elasticity is impregnated with an inert fluid in a supercritical state under high pressure.
(5) The impact-absorbing sheet according to the above (1), wherein the density of the rubber foam is from 0.01 to 0.5 g/cm³.
(6) The impact-absorbing sheet according to the above (5), wherein the density of the rubber foam is from 0.3 to 0.5 g/cm³.
(7) The impact-absorbing sheet according to the above (1), wherein a cell size in the rubber foam is from 0.1 to 1000 µm.
(8) The impact-absorbing sheet according to the above (1), wherein a thickness of the adhesive layer is 0.4 mm or more.
(9) The impact-absorbing sheet according to the above (1), wherein the dynamic shear modulus of the adhesive layer at 20°C is 1 x 10⁷ Pa or less.
(10) The impact-absorbing sheet according to the above (1), wherein the adhesive layer is an adhesive layer having cells.
(11) The impact-absorbing sheet according to the above (10), wherein a fluorinated surfactant containing a fluorinated polymer with a weight average molecular weight of 20,000 or more is used as an auxiliary when foam is mixed.
(12) The impact-absorbing sheet according to the above (10), wherein the expansion ratio is 2 times or more.
(13) The impact-absorbing sheet according to the above (10), wherein an average cell size is from 1 to 1,000 µm.
(14) The impact-absorbing sheet according to the above (10), wherein hollow microspheres are included in the adhesive layer.
(15) The impact-absorbing sheet according to the above (14), wherein the particle size of the hollow microsphere is from 1 to 500 µm.
(16) The impact-absorbing sheet according to the above (14), wherein the specific gravity of the hollow microsphere is 0.1 to 0.8 g/cm³.
(17) An image display device which comprises an image display panel, a transparent front face plate for protecting the image display panel placed on the viewing side of the image display panel, and a case accommodating them,
wherein an impact-absorbing sheet according to any one of claims 1 to 5 is disposed in a space between the image display panel and the transparent front face plate via an adhesive surface.

The impact-absorbing sheet of the present invention exhibits an excellent impact-absorbing property to both a low-speed impact and a high-speed impact. In an image display device comprising an image display panel, a transparent front face plate for protecting the image display panel placed on the viewing side of the image display panel and a case accommodating them, in the case where the impact-absorbing sheet of the preset invention is disposed in a space provided between the image display panel and the transparent front face plate via an adhesive surface, an effect on preventing a crack of the image display panel due to impact from the outside is high, and it is possible to make a design that distortion of the image of the image display panel or distortion of the case is less likely to occur. In addition, the impact-absorbing sheet of the present invention does not require an additional adhesive when it is disposed in a portable image display device or the like because it has an adhesive surface, therefore, the operation for disposing the sheet is easy. Accordingly, it can also contribute to low cost. Further, the penetration or generation of dust from the inside or outside of the device can be prevented.

### BRIEF DESCRIPTION OF THE DRAWINGS

Fig. 1 is a cross-sectional view showing one example of an impact-absorbing sheet of the present invention.
Fig. 2 is a cross-sectional view showing one example of a portable image display device equipped with an impact-absorbing sheet of the present invention.
Fig. 3 is a schematic view showing a device used in the measurement of an impact force in the Examples of the present invention.

Reference Numerals and Signs are described as follows:
1. Impact-absorbing sheet
11. Impact absorber
12. Adhesive layer
12a. Adhesive surface
20. Space provided between image display panel and transparent front face plate
21. Case
22. Image display panel
23. Transparent front face plate
30. Pendulum type device
31. Impactor
32. Support bar
33. Specimen
34. Force sensor
35. Aluminum plate
36. Power source
37. FTT Analyzer

### DETAILED DESCRIPTION OF THE INVENTION

Hereinafter, embodiments of the present invention will be described with reference to the drawings.

Fig. 1 is a cross-sectional view showing one example of an impact-absorbing sheet of the present invention. In Fig. 1, an impact-absorbing sheet 1 is composed of an impact absorber 11 and an adhesive layer 12. One surface side 12a of the adhesive layer 12 is an adhesive surface having a pressure-sensitive adhesive property. When the impact-absorbing sheet 1 has the impact absorber 11, it preferably absorbs an external impact and effectively prevents distortion of the image of the image display panel or distortion of the case. Since the impact-absorbing sheet 1 has the adhesive layer 12, it can express an impact-mitigating property to both a high-speed impact and a low-speed impact and effectively prevents breakage of the image display panel.

The thickness of the impact-absorbing sheet is generally from 0.7 to 5.0 mm, preferably from 1.0 to 2.5 mm. In the case where the thickness of the impact-absorbing sheet 1 is less than 0.7 mm, it is difficult to obtain a sufficient impact-absorbing effect. In the case where the thickness is more than 5 mm, when the impact-absorbing sheet is disposed in the inside of a portable image display device or the like, distortion of the case or the image display panel is likely to occur due to the repulsive force or the like of the impact-absorbing sheet.

### (Impact absorber)

The impact absorber 11 has a cell structure and is a layer including a single layer or a laminate of a rubber foam composed of a polymer having rubber elasticity. The rubber foam is excellent in a cushioning property and favorably absorbs an external impact. The thickness of the impact absorber is not particularly limited, however, it may be generally from about 0.3 to 2.0 mm, preferably from about 0.8 to 2.0 mm.

The polymer constituting the rubber foam is not particularly limited as long as it is a polymer having rubber elasticity, and for example, natural rubber, a variety of synthetic rubbers (such as isoprene rubber, butadiene rubber, nitrile rubber, acrylic rubber and urethane rubber) and the like can be used. A thermoplastic elastomer which shows characteristics as rubber at normal temperature and shows thermoplasticity at a high temperature is particularly preferably used in the present invention because it is easy to control the molding operation or the cell structure thereof. Examples of such a thermoplastic elastomer include, for instance, olefin-based elastomers such as ethylene-propylene copolymers, ethylene-propylene-diene copolymers and ethylene-vinyl acetate copolymers; styrene-based elastomers such as styrene-isoprene-styrene copolymers and styrene-isoprene-butadiene-styrene copolymers; polyester-based elastomers; polyurethane- based elastomers and the like. These polymers may be used alone or in combination of two or more types.

As the polymer constituting the rubber foam of the present invention, a mixture of the above-mentioned polymer that has rubber elasticity and a polymer that does not have rubber elasticity can also be used. As such a mixture, for instance, a mixture of an olefin-based elastomer such as an ethylene-propylene copolymer and an olefin-based polymer such as polypropylene can be exemplified. In the case where a mixture of a polymer that has rubber elasticity and a polymer that does not have rubber elasticity is used, the mixing ratio thereof is not particularly limited, and examples thereof include the former/latter = 1/99 to 99/1, preferred is the former/ latter = ca. 30/70 to 90/10.

The cell structure of the rubber foam may be either an open-cell structure or a closed-cell structure, or may be a structure in which both are mixed, and there is no particular limitation. However, a rubber foam comprising only a closed-cell structure is likely to have a high repulsive elasticity. In the case where an impact-absorbing sheet having such a rubber foam is disposed in a portable image display device or the like, a problem in that distortion or the like of the image display panel or the case occurs is likely to be caused due to the repulsive elasticity of the impact-absorbing sheet. Therefore, it is preferred that the rubber foam has an open-cell structure.

The density (apparent density) of the rubber foam is preferably from 0.01 to 0.50 g/cm³ (more preferably from 0.3 to 0.5 g/cm³). By setting the density to a value in this range, a rubber foam having a good balance of flexibility and repulsive elasticity is realized, and in particular an impact by pushing or the like (low-speed deformation) can be effectively buffered. In the case where the density is less than 0.01 g/cm³, the rubber foam becomes too flexible thereby being inferior in a cushioning property or dust resistance, and in the case where the density is more than 0.50 g/cm³, it lacks in flexibility and becomes lacking in followability with respect to a curved surface or the like, thereby being inferior in a cushioning property or dust resistance.

The cell size (average cell size) in the rubber foam is not particularly limited, and is generally from about 0.1 to 1000 µm (preferably from 50 to 500 µm).

As a method of forming the cell structure of the rubber foam, a method generally used for foam formation such as a physical method, a chemical method or the like can be adopted. The general physical method is a method of forming cells by dispersing a low-boiling liquid (foaming agent) such as a chlorofluorocarbon or a hydrocarbon in a polymer, and then volatilizing the foaming agent by heating. In addition, the chemical method is a method of obtaining a foam by forming cells by a gas generated by thermal decomposition of a compound (foaming agent) added to a base polymer.

In the present invention, it is preferred to form the cell structure by a method using a high-pressure inert fluid as a foaming agent, for example, a method of forming a foam through a step of pressure reduction after a thermoplastic elastomer is impregnated with a high-pressure inert fluid. In the foaming method by a general physical method as described above, there is concern of combustibility or toxicity of a substance to be used as a foaming agent and an effect on the environment such as destruction of the ozone layer. In addition, in the foaming method by a chemical method, since the residue of the foaming gas is remained in the foaming gas, contamination of a corrosive gas or impurities in the gas becomes a problem. According to a method using a high- pressure inert fluid as a foaming agent, such a problem of contamination can be eliminated, and the cell structure is easy to control and it is possible to form a fine cell.

In this way, in the present invention, as a method for producing the rubber foam, a production method utilizing a method using a high-pressure inert fluid as a foaming agent is preferred, and a method of forming a foam through a step of pressure reduction after a polymer having rubber elasticity, for example, a thermoplastic elastomer is impregnated with a high-pressure inert fluid can be preferably adopted. Incidentally, when impregnation with an inert fluid is performed, an unfoamed molded article which has been molded into a sheet in advance may be impregnated with an inert fluid, or a melted polymer may be impregnated with an inert fluid under pressure.

The above-mentioned inert fluid is not particularly limited as long as it is inert to a polymer to be used and the polymer can be impregnated with it, and examples thereof include rare gases such as helium and argon, inorganic gases such as nitrogen and carbon dioxide and the like. Among these, carbon dioxide has a relatively high affinity for a polymer material, has little effect on the environment, and is advantageous in terms of cost; therefore, it can be most preferably used.

The inert fluid when a polymer is impregnated therewith is preferably in a supercritical state. In a supercritical state, the solubility of the inert fluid in a polymer increases, whereby the inert fluid can be incorporated thereinto at a high concentration. Incidentally, the critical temperature of carbon dioxide is 31°C and the critical pressure thereof is 7.4 MPa.

When the rubber foam is formed, an additive may be added as needed. The type of the additive is not particularly limited, and a variety of additives which are generally used in foam formation can be used. Examples of such an additive include, for instance, cell nucleating agents, crystal nucleating agents, plasticizers, colorants (pigments, dyes, etc.), ultraviolet absorbents, antioxidants, anti-aging agents, fillers, reinforcing agents, flame retardants, vulcanizing agents, surface-treating agents and the like. The added amount of the additive can be appropriately selected within a range that does not impair the cell formation or the like, and the added amount used for a common rubber foam can be adopted.

In the case where a polymer is foamed by impregnating it with a high-pressure inert fluid, more specifically, cells are formed by a step of impregnation with an inert fluid in which a polymer is impregnated with an inert fluid under high pressure, a step of pressure reduction in which a pressure is reduced to foam the polymer after the above step, and as needed a step of heating in which cells are expanded by heating. In this case, as described above, an unfoamed molded article which has been molded in advance may be impregnated with an inert fluid, or a melted polymer may be impregnated with an inert fluid under pressure and molded simultaneously at the time of reducing pressure. These steps may be performed either a batch method or a continuous method.

In the case of the batch method, for example, a foam can be formed as follows. Firstly, an unfoamed molded article (such as a rubber sheet for molding a foam) is formed by extruding a polymer such as a thermoplastic elastomer using an extruder such as a single-screw extruder or a twin-screw extruder. Alternatively, a polymer is uniformly kneaded in advance using a kneading machine equipped with a roller, a cam and a Banbury type blade, and the polymer is press-molded using a hot plate pressing machine, thereby forming an unfoamed molded article (such as a rubber sheet for molding a foam) . Then, the obtained unfoamed molded article is placed in a pressure-resistant container, a high-pressure inert fluid is introduced therein, and the unfoamed molded article is impregnated with the inert fluid. In this case, the form of the unfoamed molded article is not particularly limited, and it may be any form such as roll, plate or the like. In addition, the introduction of the high-pressure inert fluid may be performed either continuously or on an intermittent basis. At the time when the polymer is sufficiently impregnated with the high-pressure inert fluid, the pressure is released (generally up to atmospheric pressure) to form cell nuclei in the polymer. The cell nuclei may be directly expanded at room temperature, or they may be expanded by heating as needed. As the method of heating, for example, a water bath, an oil bath, a heated roll, a hot-air oven, far-infrared radiation, near-infrared radiation, microwaves and the like can be exemplified. After cells are expanded in this way, they are rapidly cooled with cold water or the like, and the shape thereof is fixed.

On the other hand, according to the continuous method, for example, a foam can be formed as follows. A high-pressure inert gas is injected while kneading a polymer using a pressure-resistant extruder such as a pressure-resistant single-screw extruder or a pressure-resistant twin-screw extruder, and the polymer is sufficiently impregnated with the gas. Then, the polymer is cooled to a temperature suitable for foaming as needed, and molded into a sheet by being extruded from a die or the like, and at the same time, the pressure is released (generally up to atmospheric pressure), whereby foaming and molding are performed at the same time. The cells are expanded by heating depending on circumstances. After the cells are expanded, they are rapidly cooled with cold water or the like, and the shape thereof is fixed.

The pressure in the above-mentioned step of impregnation with an inert fluid is generally 6 MPa or more (e.g., from about 6 to 100 MPa). In the case where the pressure is in the range lower than 6 MPa, the cell size and the cell density are changed to a large extent by changing the impregnating pressure only a little; therefore, it tends to be difficult to control the cell size and the cell density.

The mixed amount of the inert fluid is not particularly limited, however, it is generally about 2 to 10% by weight based on the total weight of the polymer constituting the rubber foam. It can be mixed by adjusting the amount so that the characteristic such as the density or repulsive elasticity of the rubber foam becomes a desired value.

The temperature in the step of impregnation with an inert fluid varies depending on the type of inert fluid or polymer to be used and can be selected from a wide range, however, when considering operability or the like, it is, for example, from about 10 to 350°C. For example, in the case where an unfoamed molded article in the form of sheet or the like is impregnated with an inert fluid by the above-mentioned batch method, the impregnating temperature is generally from about 10 to 200°C, preferably from about 40 to 200°C. In addition, in the case where a melted polymer is impregnated with an inert fluid by the above-mentioned continuous method, the impregnating temperature is generally from about 60 to 350°C. Incidentally, in the case where carbon dioxide is used as an inert fluid, in order to maintain a supercritical state, the temperature at impregnation is 32°C or higher, particularly, it is preferably 40°C or higher.

In the above-mentioned step of pressure reduction, the rate of pressure reduction is not particularly limited, however, it is generally from about 5 to 300 MPa/sec. In addition, the heating temperature in the above-mentioned step of heating is generally from about 40 to 250°C, preferably from about 60 to 250°C.

The density (apparent density) of the above-mentioned rubber foam can be adjusted, for example, by appropriately selecting and setting the operation conditions such as the temperature, pressure, time and the like in the step of impregnation with an inert fluid, the operation conditions such as the rate of pressure reduction, temperature, pressure and the like in the step of pressure reduction, the heating temperature after reducing pressure and the like according to the type of inert fluid or polymer to be used.

Incidentally, the rubber foam may be a laminate obtained by laminating two or more foam bodies. With regard to the number of the laminated rubber foam bodies or the thickness of each rubber foam, the total thickness thereof is preferably in the range of not more than 5.0 mm, and may be set in the range generally from 0.4 to 5.0 mm, more preferably from 0. 6 to 2. 0 mm. As the number of laminated layers is increased, the cost is increased; therefore, it may be generally 10 or less. In the case where the rubber foam bodies are formed into a laminate, rubber foam bodies molded into a sheet may be bonded to one another using an appropriate adhesive or the like.

### (Adhesive layer)

The impact-absorbing sheet 1 of the present invention has an adhesive layer 12 on at least one surface of the above-mentioned impact-absorber 11. This adhesive layer 12 has a high absorbing effect particularly on a high-speed impact. Accordingly, an impact-absorbing sheet that can favorably mitigate both a high-speed impact and a low-speed impact can be obtained.

The thickness of the adhesive layer 12 is 0.3 mm or more (e.g., from 0.3 to 3.0 mm), preferably 0.4 mm or more (e.g., from 0.4 to 3.0 mm). In the case where the thickness of the adhesive layer 12 is less than 0.3 mm, the absorbing ability particularly to a high-speed impact is inferior.

As for the adhesive layer 12, any polymer which has an adhesive property and can be subjected to a film-forming process can be used, however, it is preferred to use a polymer that can realize the dynamic shear modulus of the adhesive layer at 20°C of 1 x 10⁷ Pa or less (e.g., from 1 x 10³ to 1 x 10⁷ Pa), more preferably 1 x 10⁵ Pa or less (e.g., from 1 x 10³ to 1 x 10⁵ Pa) . In the case where the dynamic shear modulus of the adhesive layer at 20°C is more than 1 x 10⁷ Pa, the absorbing ability to a high-speed impact is inferior in some cases. In addition, when a polymer having a pressure-sensitive adhesive property is used, since an additional adhesive is not needed at the time of disposing the impact-absorbing sheet in a portable image display device or the like, the workability is good, and an effect on preventing the penetration or generation of dust from the inner or outer parts or the like can be obtained; therefore, it is further preferred.

Examples of such a polymer include various materials such as silicone-based, polyester-based, urethane-based, acrylic-based and rubber-based materials (natural rubber and various synthetic rubbers such as polyisoprene, polyisobutylene, styrene-butadiene rubbers, butyl rubbers, styrene-isoprene block polymers and silicon rubbers). Among these, an acrylic polymer is particularly preferred because it has little problem of the contamination in the substance to be attached or the like or in terms of the environment, and the physical property can be easily adjusted by controlling the molecular weight or by providing a crosslinking structure.

As the above-mentioned acrylic polymer, a base polymer in a known acrylic pressure-sensitive adhesive can be preferably used. The acrylic pressure-sensitive adhesive generally contains, as a base polymer, an acrylic polymer mainly composed of a (meth)acrylate ester as a monomer component. As for the (meth) acrylate ester in the acrylic polymer, only one type thereof may be used, or 2 or more types thereof may be used in combination. As such a (meth)acrylate ester, an alkyl (meth)acrylate ester can be preferably used. Examples of the alkyl (meth) acrylate ester in the above-mentioned acrylic polymer include C₁₋₁₈ alkyl (meth) acrylate esters (preferably C₄₋₁₂ alkyl (meth)acrylate esters) such as butyl (meth)acrylate, isobutyl (meth)acrylate, hexyl (meth)acrylate, 2-ethylhexyl (meth)acrylate, isooctyl (meth)acrylate, isononyl (meth)acrylate, lauryl (meth)acrylate and stearyl (meth)acrylate. The alkyl group in these alkyl acrylate esters may be either linear or branched.

In addition, the above-mentioned (meth)acrylate ester may be an alkenyl (meth) acrylate ester such as allyl (meth)acrylate or isopropenyl (meth) acrylate.

In the above-mentioned acrylic polymer, a variety of copolymerizable monomers that can be copolymerized with a (meth)acrylate ester may be used as a monomer component. By using a copolymerizable monomer as a monomer component, for example, a physical property such as an optical property or heat resistance can be improved. The copolymerizable monomers can be used alone or in combination of 2 or more types.

Examples of the above-mentioned copolymerizable monomer include, for instance, carboxyl group-containing monomers such as (meth) acrylic acid and itaconic acid; hydroxyl group- containing monomers such as hydroxyethyl (meth)acrylate and hydroxypropyl (meth) acrylate; amide group-containing monomers such as (meth)acxylamide and N,N-dimethyl (meth)acrylamide; amino group-containing monomers such as aminoethyl (meth)acrylate and N,N-dimethyl aminoethyl (meth)acrylate; glycidyl group-containing monomers such as glycidyl (meth)acrylate; cyano group-containing monomers such as acrylonitrile; heterocycle-containing vinyl monomers such as N-vinyl imidazole and N-vinyl oxazole; polyfunctional monomers such as hexanediol di(meth)acrylate, pentaerythritol tri(meth)acrylate and divinylbenzene; and the like. In addition, vinyl esters such as vinyl acetate and vinyl propionate; aromatic vinyl compounds such as styrene and vinyl toluene; olefins or dienes such as ethylene and butadiene; and the like can be used.

These monomers can be polymerized by a known method such as a solution polymerization method, an emulsion polymerization method or a bulk polymerization method using an appropriate polymerization initiator, and the method is not particularly limited. In order to form a relatively thick adhesive layer (300 µm or more) to be used in the present invention as a single layer, it may be formed by, for example, a method as described below. That is, a photopolymerization initiator is added to a monomer mixture, the monomers are partially polymerized by irradiation with radiation such as ultraviolet rays, the obtained partial polymer is molded into a sheet by, for example, coating it on a substrate such as a release paper, and then polymerization is completed by further irradiation with radiation such as ultraviolet rays.

In the above-mentioned polymerization method, a photopolymerization initiator may be further added to the partial polymer as needed or a crosslinking agent may be added. In addition, instead of ultraviolet rays, for example, ionizing radiation such as α-rays, β-rays, γ-rays or electron beam may be irradiated. The irradiation energy of the radiation or the irradiation time is not particularly limited, as long as it can achieve the activation of the photopolymerization initiator to cause the reaction of monomer components.

Examples of the above-mentioned photopolymerization initiator include, for instance, acetophenone compounds such as 4-(2-hydroxyethoxy)-phenyl-2-(hydroxy-2-propyl) ketone, α-hydroxy-α,α'-dimethylacetophenone, methoxyacetophenone, 2,2-diethoxyacetophenone, 1-hydroxycyclohexyl-phenylketone and 2-methyl-1-[4-(methylthio)-phenyl]-2-morpholino-propane-1-one; benzoin ether compounds such as benzoin ethyl ether, benzoin isopropyl ether and anizoin methyl ether; α-ketol compounds such as 2-methyl-2-hydroxypropiophenone; ketal compounds such as benzyl dimethyl ketal; aromatic sulfonyl chloride compounds such as 2-naphthalene sulfonyl chloride; photoactive oxime compounds such as 1-phenone-1,1-propanedione-2-(o-ethoxycarbonyl) oxime; benzophenone compounds such as benzophenone, benzoylbenzoic acid and 3,3'-dimethyl-4-methoxybenzophenone; and the like. These photopolymerization initiators can be used alone or in combination of two or more types.

The used amount of the above-mentioned photopolymerization initiator is not particularly limited, however, for example, it can be selected from the range from 0.01 to 5 parts by weight (preferably from 0.05 to 3 parts by weight), based on 100 parts by weight of the total monomer components for forming the base polymer in the adhesive layer.

In addition, examples of the above-mentioned crosslinking agent include, for instance, hexanediol di(meth)acrylate, (poly)ethylene glycol di(meth)acrylate, (poly)propylene glycol di(meth)acrylate, pentaerythritol di(meth)acrylate, trimethylol propane tri(meth)acrylate, pentaerythritol tri(meth)acrylate, dipentaerythritol hexa(meth)acrylate, epoxy (meth)acrylate, polyester (meth)acrylate, urethane (meth)acrylate and the like.

The adhesive layer of the present invention may be an adhesive layer having a cell structure. The adhesive layer having a cell structure is not particularly limited as long as it is obtained by foaming the above-mentioned polymer for forming an adhesive layer by a known method, however, those obtained by using a fluorinated surfactant containing a fluorinated polymer with a weight average molecular weight of 20, 000 or more as an auxiliary when foam is mixed are preferred in terms of foam stability and the like.

The foam volume that can be mixed in the adhesive layer is not particularly limited, however, it is preferred that the expansion ratio is 2 times or more (e.g., from 2 to 2.5 times). The foam to be mixed therein may have either a closed-cell structure or an open-cell structure, or may have a structure in which both are mixed. In addition, the cell is usually in the shape of a sphere, however, it may be in the shape of an irregular sphere. With regard to the above-mentioned cell, an average cell size (diameter) is not particularly limited, and for example, it can be selected from the range from 1 to 1, 000 µm (preferably from 10 to 500 µm, more preferably from 30 to 300 µm). Incidentally, a gas component contained in the cell is not particularly limited, and a variety of gas components such as air other than inert gasses including nitrogen, carbon dioxide, argon and the like can be used.

The weight average molecular weight of the fluorinated polymer constituting the above-mentioned fluorinated surfactant is not particularly limited as long as it is 20,000 or more, however, for example, it can be selected from the range from 20,000 to 100,000 (preferably from 22,000 to 80,000, more preferably from 24, 000 to 60, 000) . In the case where the weight average molecular weight of the fluorinated polymer constituting the fluorinated surfactant is less than 20,000, the mixability of foam or the stability of mixed foam is decreased. Such a fluorinated polymer contains at least a monomer having a fluorine-containing group as a monomer component. As a fluorinated monomer, one type may be used or two or more types may be used in combination.

As the above-mentioned fluorinated monomer, for example, a vinyl monomer having a fluorine-containing group can be preferably used. In such a vinyl monomer having a fluorine-containing group, a perfluoro group is preferred as the fluorine-containing group. The perfluoro group may be monovalent or multivalent such as divalent or higher valent. Such a perfluoro group may be attached to the vinyl monomer via another group (e.g., -O- group, -OCO- group, an alkylene group, etc). Further, in such a fluorine-containing group such as a perfluoro group, the number of carbons in the region of the perfluoro group is not particularly limited, and for example, it is 1 or 2 or more (preferably from 3 to 30, more preferably from 4 to 20).

As the vinyl monomer having a fluorine-containing group, for example, a (meth)acrylate ester having a fluorine-containing group such as a perfluoro C₁₋₂₀ alkyl (meth)acrylate is preferred. Examples of the above-mentioned perfluoro C₁₋₂₀ alkyl (meth)acrylate include, for instance, perfluoro-2-ethylhexyl (meth)acrylate, perfluoro-isooctyl (meth)acrylate, perfluoro-nonyl (meth)acrylate, perfluoro-decyl (meth)acrylate and the like.

The fluorinated polymer may contain together with the fluorinated monomer, a monomer component capable of copolymerizing with the fluorinated monomer as the monomer component. For example, in the case where the fluorinated monomer is a (meth)acrylate ester having a fluorine-containing group, as the copolymerizable monomer, a (meth) acrylate ester can be preferably used, and in particular, a C₁₋₂₀ alkyl (meth)acrylate is preferred. In addition, (meth)acrylic acid having an alicyclic hydrocarbon group such as isobornyl (meth)acrylate, (meth)acrylic acid having an aromatic hydrocarbon group such as phenyl (meth)acrylate and the like can be exemplified. Further, carboxyl group-containing monomers such as (meth) acrylic acid and itaconic acid or anhydrides thereof; sulfonic acid group-containing monomers such as sodium vinyl sulfonate; aromatic vinyl compounds such as styrene and vinyl toluene; cyano group- containing monomers such as acrylonitrile and methacrylonitrile; olefins or dienes such as ethylene, butadiene and isoprene; amide group-containing monomers such as acrylamide; hydroxyl group-containing monomers such as hydroxyethyl (meth) acrylate; and the like can be exemplified, however, it is not limited to these. From these monomers, one or two or more types can be selected and used.

The used amount (in terms of the solid content) of the fluorinated surfactant is not particularly limited, however, for example, it can be selected from the range from 0.01 to 2 parts by weight (preferably from 0.03 to 1.5 parts by weight, more preferably from 0.05 to 1 part by weight) based on 100 parts by weight of the total monomer components for forming the base polymer in the adhesive layer having cells. In the case where the used amount of the fluorinated surfactant is less than 0.01 part by weight, based on 100 parts by weight of the base polymer, the mixability of foam is decreased, and it will be difficult to mix a sufficient amount of foam in the adhesive layer.

A method of mixing foam is not particularly limited, and a known foam mixing method can be used. An example of a device includes one provided with a stator having a number of fine teeth on a disk having a through-hole in the center thereof and a rotor having fine teeth similar to the stator on a disk facing the stator having the teeth. A monomer mixture or a partial polymer thereof is introduced between the teeth of the stator and the teeth of the rotor in this device, and a gas component for foam formation can be introduced into the monomer mixture or the partial polymer thereof through the through-hole while spinning the rotor at high speed.

As a method of allowing the adhesive layer to incorporate foam, a method of allowing the adhesive layer to incorporate hollow microspheres or the like is also preferred. Examples of the hollow microspheres include, for instance, hollow balloons made of glass such as a hollow glass balloon; hollow balloons made of a metal compound such as a hollow alumina balloon; hollow balloons made of a porcelain such as a hollow ceramic balloon; hollow balloons made of a resin such as a hollow acrylic balloon and a hollow vinylidene chloride balloon; and the like.

The particle size (average particle size) of the hollow microsphere is not particularly limited, however, for example, it can be selected from the range from 1 to 500 µm (preferably from 5 to 200 µm).

The specific gravity of the hollow microsphere is not particularly limited, however, for example, it can be selected from the range from 0.1 to 0.8 g/cm³ (preferably from 0.12 to 0.5 g/cm³).

The used amount of the hollow microsphere is not particularly limited, however, for example, it can be selected from the range from 3 to 50% by weight (preferably from 5 to 15% by weight) based on the total monomer components for forming the base polymer in the adhesive layer. Preferably, it can be used by adjusting the used amount so that the expansion ratio becomes 2 times or more (e.g., from 2 to 2.5 times).

In the adhesive layer of the present invention, an additive such as a filler, an anti-aging agent or a colorant may be contained as needed in an amount within a range that does not impair a property such as viscoelasticity or transparency.

When the adhesive layer is formed, as described above, after a substrate such as a release paper is coated with a monomer mixture or a partial polymer thereof, polymerization may be completed by irradiation with radiation such as ultraviolet rays. As for the release paper, those commonly used can be used, and there is no particular limitation. However, examples thereof include in addition to a substrate having a release-treated layer with a release treatment agent on at least one of the surfaces, a low-adhesive substrate composed of a fluorinated polymer, a low-adhesive substrate composed of a non-polar polymer (e.g., an olefin resin such as polyethylene or polypropylene) and the like.

Incidentally, the adhesive layer may be a single layer or a laminate obtained by laminating two or more sheets of adhesive layers. The number of the laminated adhesive layers or the thickness of each adhesive layer constituting the laminate is not particularly limited, however, it is preferred that the total thickness of the laminate is 0.3 mm or more. It may preferably be set in the range generally from 0.3 to 3.0 mm, preferably from 0.4 to 3.0 mm.

### (Impact-absorbing sheet)

By bonding the rubber foam and adhesive layer prepared by the above-mentioned methods together, an impact-absorbing sheet of the present invention can be produced. When being bonded together, they may be bonded by utilizing the adhesive property of the adhesive layer or by using an appropriate adhesive or the like as needed.

The impact-absorbing sheet of the present invention exhibits an excellent impact-absorbing property to both a high-speed impact and a low-speed impact. In a portable image display device or the like, when the impact-absorbing sheet of the present invention is disposed in a space between the image display panel and the transparent front face plate provided on the viewing side of the image display panel, an effect on preventing a crack of the image display panel due to impact from the outside is high, and it is possible to make a design that distortion of the image of the image display panel or the distortion of the case is less likely to occur.

In addition, the impact-absorbing sheet of the present invention does not require an additional adhesive when it is disposed in a portable image display device or the like because it has an adhesive surface; therefore, the disposing operation is easy. Accordingly, it can also contribute to low cost. Further, the penetration or generation of dust from the inside or outside of the device can be prevented.

The impact-absorbing sheet of the present invention can be particularly preferably used as an impact-absorbing sheet for a portable image display device or the like, however, its usage is not particularly limited and it can be used for a wide variety of applications. For example, it is also useful as a dust-proof material to be used at the time of disposing (installing) a variety of members or parts at a predetermined position.

Examples of the member that can be disposed (installed) utilizing the impact-absorbing sheet of the present invention include, for instance, an image display member disposed in an image display device such as an electroluminescence display device and a plasma display device, a camera or lens disposed in a mobile communication device such as, so-called, a "cellular phone" or a "personal digital assistant" and the like. In addition, the impact-absorbing sheet of the present invention can be used a sealing material for preventing leakage of toner from a toner cartridge to be used in an image forming device such as a copying machine or a printer. The form of the impact-absorbing sheet of the present invention is not particularly limited, and it may appropriately be subjected to processing such as cutting or punching according to the intended use.

### (Image display device)

In the image display device of the present invention, for example, as shown in Fig. 2, an image display panel is placed in a case 21, and a transparent front face plate 23 for protecting the image display panel is provided on the viewing side thereof. When the transparent front face plate 23 is placed, a space 20 is provided between the image display panel 22 and the transparent front face plate 23, and an impact-absorbing sheet 1 is placed in this space 20 via the adhesive surface of the sheet. The space 20 is made smaller than the thickness of the impact-absorbing sheet 1 (e.g., from about 50 to 80% of the thickness of the impact-absorbing sheet), the impact-absorbing sheet is inserted therein in a compressed state. This prevents an external impact force from acting directly on the image display panel 22 and also prevents a decrease in visibility caused by the penetration or generation of dust from the external environment or inner members.

Since the impact-absorbing sheet 1 is placed, the device has resistance to both a high-speed impact and a low-speed impact, and breakage of an image display panel or a case, distortion of an image, a case or the like is less likely to occur. In addition, since it has a design that penetration or generation of dust from the inside or outside of the device is less likely to occur, it is preferred as a portable image display device. Incidentally, examples of the image display device include a liquid crystal display device, an electroluminescence display device, a plasma display device and the like.

### EXAMPLES

Hereinafter, the present invention will be described more specifically with reference to Examples, however, the present invention is not limited to these Examples.

### Example 1

### (Preparation of rubber foam)

45 parts by weight of polypropylene (MFR: 0.35 g/10 min), 45 parts by weight of a polyolefin elastomer (MFR: 6g/10min, JISA hardness: 79°), 10 parts by weight of magnesium hydroxide and 10 parts by weight of carbon were kneaded at 200°C with a twin-screw kneading machine manufactured by Japan Steel Works Ltd. (JSW), extruded in a strand form, cooled with water, and formed in a pellet form. This pellet was fed into a short-screw extruder manufactured by JSW, and carbon dioxide gas was injected at 220°C under a pressure of 13 MPa. Carbon dioxide gas was injected at a ratio of 5% by weight to the total amount of the polymer. The pressure after injection of carbon dioxide gas was set at 12 MPa. After being sufficiently saturated with carbon dioxide gas, the pellet was cooled to a temperature suitable for foaming, extruded from the die to form a sheet with a thickness of 1.0 mm, whereby a foam having open cells with a density of 0.04 g/cm³ and an average cell size of 60 µm was obtained.

### (Preparation of adhesive layer)

A mixture composed of 90 parts by weight of 2-ethylhexyl acrylate, 10 parts by weight of acrylic acid, and 0.1 part by weight of 2,2-dimethoxy-2-phenylacetophenone (a photopolymerization initiator) was partially polymerized by irradiation with ultraviolet rays, whereby a viscous solution composed of a polymer- monomer mixture with a polymerization ratio of 10% by weight was obtained. To this viscous solution, 0.2 part by weight of trimethylol propane triacrylate (an internal crosslinking agent) and 0.1 part by weight of 2,2- dimethoxy-2-phenylacetophenone (a photopolymerization initiator) were added, whereby a photopolymerizable composition was prepared.

A release-treated film composed of a polyethylene terephthalate film with a thickness of 50 µm subjected to a silicone release treatment was coated with this photopolymerizable composition, irradiated with ultraviolet rays at a dose of 2,000 mJ/cm² to effect photopolymerization, whereby an adhesive layer with a thickness of 1.0 mm composed of an acrylic adhesive material was formed.

### (Preparation of impact-absorbing sheet)

The above-mentioned adhesive layer was bonded to the above-mentioned rubber foam having open cells, whereby an impact-absorbing sheet was prepared.

### Example 2

By following the same procedure as in Example 1 except that the thickness of the adhesive layer was set to 0.6 mm, an impact-absorbing sheet was prepared.

### Example 3

By following the same procedure as in Example 1 except that the thickness of the rubber foam was set to 1.5 mm and the thickness of the adhesive layer was set to 0.4 mm, an impact-absorbing sheet was prepared.

### Example 4

### (Preparation of rubber foam)

By following the same procedure as that of the (preparation of rubber foam) in Example 1, a rubber foam was prepared.

### (Preparation of adhesive layer)

A mixture composed of 90 parts by weight of 2-ethylhexyl acrylate, 10 parts by weight of acrylic acid, and 0.1 part by weight of 2,2-dimethoxy-2-phenylacetophenone (a photopolymerization initiator) was partially polymerized by irradiation with ultraviolet rays, whereby a viscous solution composed of a polymer- monomer mixture with a polymerization ratio of 10% by weight was obtained. To this polymer-monomer mixture, a glass balloon (trade name: Cel-Star Z-27, manufactured by Tokai Kogyo Co.) was added at 8.6% by weight based on the polymer-monomer mixture, and then trimethylol propane acrylate (an internal crosslinking agent), 2,2- dimethoxy-2-phenylacetophenone (a photopolymerization initiator) and a fluorinated surfactant (trade name: Surflon S-393, manufactured by Sei Chemical Co.) were added at 0.2 part by weight, 0.1 part by weight and 1 part by weight, respectively based on 100 parts by weight of the total monomer components, whereby a photopolymerizable composition was prepared. Foam was mixed in this photopolymerizable composition by mechanically stirring while introducing nitrogen. Then, a release-treated film composed of a polyethylene terephthalate film with a thickness of 50 µm subjected to a silicone release treatment was coated with this photopolymerizable composition, irradiated with ultraviolet rays at a dose of 2,000 mJ/cm² to effect photopolymerization, whereby an adhesive layer with a thickness of 1.0 mm and a expansion ratio of 2.0 times was prepared.

### (Preparation of impact-absorbing sheet)

The above-mentioned adhesive layer having a glass balloon was bonded to the above-mentioned rubber foam having open cells, whereby an impact-absorbing sheet was prepared.

### Example 5

### (Rubber foam)

An ethylene-propylene-diene rubber with a thickness of 1.0 mm [a foam having closed cells mainly composed of EPDM (trade name: EPT-Sealer No.6800, manufactured by Nitto Denko Co.)] was used as a rubber foam.

### (Preparation of adhesive layer)

By following the same procedure as that of the (preparation of adhesive layer) in Example 4 except that the expansion ratio was set to 1.1 times by adjusting the introduced amount of nitrogen, an adhesive layer was prepared.

### (Preparation of impact-absorbing sheet)

The above-mentioned adhesive layer having a glass balloon was bonded to the above-mentioned rubber foam having closed cells, whereby an impact-absorbing sheet was prepared.

### Comparative Example 1

By following the same procedure as that of the (preparation of rubber foam) in Example 1 except that the thickness was set to 2. 0 mm, a rubber foam was prepared. To this rubber foam with a thickness of 2.0 mm, a two-sided adhesive tape with a thickness of 0.08 mm (No. 532, manufactured by Nitto Denko Co.) was bonded, whereby an impact-absorbing sheet was prepared.

### Comparative Example 2

Two sheets of closed-cell rubber foam bodies with a thickness of 1.0 mm (trade name: EPT-Sealer No.6800, manufactured by Nitto Denko Co.) were bonded together with an adhesive with a thickness of 0.025 mm, whereby a rubber foam laminate with a total thickness of 2.0 mm was prepared. To this rubber foam laminate, a two-sided adhesive tape with a thickness of 0.08 mm (No. 532, manufactured by Nitto Denko Co.) was bonded, whereby an impact-absorbing sheet was prepared.

### Comparative Example 3

By following the same procedure as in Example 1 except that the thickness of the adhesive layer was set to 0.2 mm, an impact-absorbing sheet was prepared.

### (Evaluation of tests)

The following tests were carried out for the impact- absorbing sheets obtained in Examples and Comparative Examples. The results are shown in Table 1.

### (Dynamic shear modulus)

By using a viscoelastic spectrometer (trade name: ARES, manufactured by Rheometric Scientific Inc.), temperature dispersion measurement was carried out at a frequency of 1 Hz, and a dynamic shear modulus at 20°C was obtained.

### (Impact force)

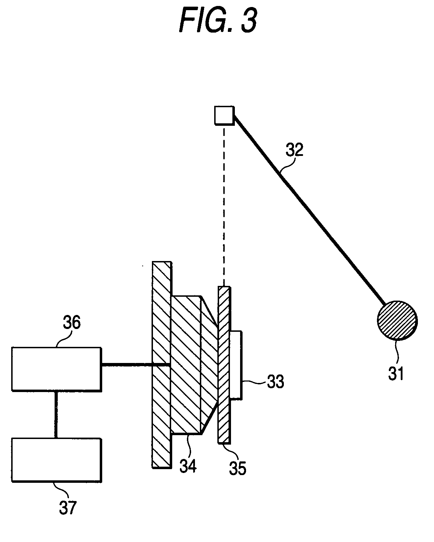

Impact force was measured using a pendulum type device as shown in Fig. 3. The pendulum type device was produced by providing an impactor 31 comprising a steel ball with a diameter of 19 mm and a weight of 28 gf (0.27 N) with a support bar with a length of 350 mm attached to the impactor. Reference numerals 34, 35, 36 and 37 denote a force sensor (manufactured by TOYO Corporation), an aluminum plate, a power source, a multi-purpose FTT analyzer (manufactured by Ono Sokki Co.), respectively. The impact-absorbing sheets prepared in Examples and Comparative Examples were cut into squares which were 20 by 20 mm and used as a specimen 33. This specimen was bonded to an aluminum plate 35 utilizing the adhesive surface. The impact force at the time of striking the steel ball 31 was detected with the force sensor 34 and analyzed with the multi-purpose FTT analyzer 37 (manufactured by Ono Sokki Co).

Incidentally, the speed right before the impactor 31 struck the impact-absorbing sheet 33 was measured with a linear motion speed meter ST-1210 (manufactured by Ono Sokki Co.) and a sensor FU-77G (manufactured by Keyence Co).

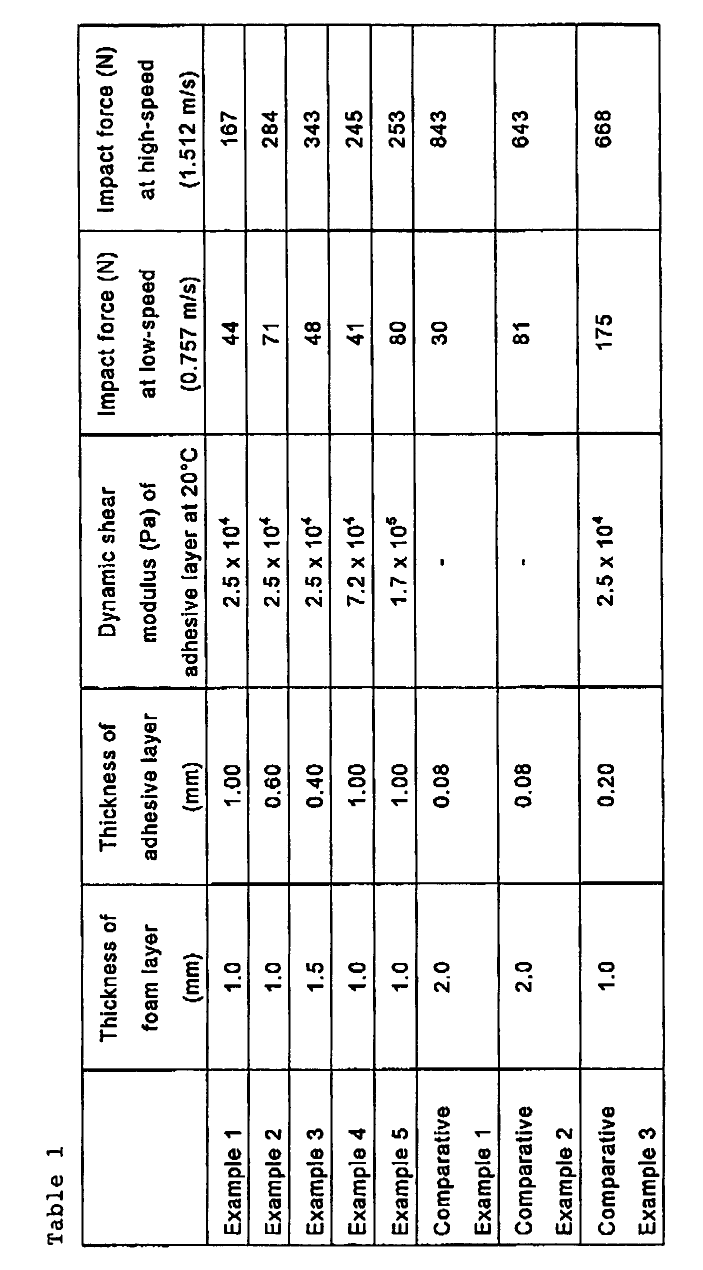

## Claims

1. An impact-absorbing sheet which comprises:
an impact absorber including a single layer or a laminate of a rubber foam,
an adhesive layer on at least one surface of the impact absorber, wherein a thickness of the adhesive layer is 0.3 mm or more.

2. The impact-absorbing sheet according to claim 1, wherein a thickness of the impact absorber is from 0.3 to 2.0 mm.

3. The impact-absorbing sheet according to claim 1, wherein a polymer constituting the rubber foam is a thermoplastic elastomer.

4. The impact-absorbing sheet according to claim 1, wherein the rubber foam is a foam formed through a step of pressure reduction after a polymer having rubber elasticity is impregnated with an inert fluid in a supercritical state under high pressure.

5. The impact-absorbing sheet according to claim 1, wherein the density of the rubber foam is from 0.01 to 0.5 g/cm³.

6. The impact-absorbing sheet according to claim 5, wherein the density of the rubber foam is from 0.3 to 0.5 g/cm³.

7. The impact-absorbing sheet according to claim 1, wherein a cell size in the rubber foam is from 0.1 to 1000 µm.

8. The impact-absorbing sheet according to claim 1, wherein a thickness of the adhesive layer is 0.4 mm or more.

9. The impact-absorbing sheet according to claim 1, wherein the dynamic shear modulus of the adhesive layer at 20°C is 1 x 10⁷ Pa or less.

10. The impact-absorbing sheet according to claim 1, wherein the adhesive layer is an adhesive layer having cells.

11. The impact-absorbing sheet according to claim 10, wherein a fluorinated surfactant containing a fluorinated polymer with a weight average molecular weight of 20,000 or more is used as an auxiliary when foam is mixed.

12. The impact-absorbing sheet according to claim 10, wherein the expansion ratio is 2 times or more.

13. The impact-absorbing sheet according to claim 10, wherein an average cell size is from 1 to 1,000 µm.

14. The impact-absorbing sheet according to claim 10, wherein hollow microspheres are included in the adhesive layer.

15. The impact-absorbing sheet according to claim 14, wherein the particle size of the hollow microsphere is from 1 to 500 µm.

16. The impact-absorbing sheet according to claim 14, wherein the specific gravity of the hollow microsphere is 0.1 to 0.8 g/cm³.

17. An image display device which comprises an image display panel, a transparent front face plate for protecting the image display panel placed on the viewing side of the image display panel, and a case accommodating them,
wherein an impact-absorbing sheet according to any one of claims 1 to 5 is disposed in a space between the image display panel and the transparent front face plate via an adhesive surface.
